(19) Europäisches Patentamt
European Patent Office
Office européen des brevets

(11) EP 2 265 026 A1

(12) EUROPEAN PATENT APPLICATION

(43) Date of publication:
22.12.2010 Bulletin 2010/51

(51) Int Cl.:
$H04N\ 7/26^{(2006.01)}$

(21) Application number: 09290453.1

(22) Date of filing: 16.06.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(71) Applicant: Canon Kabushiki Kaisha
Tokyo 146-8501 (JP)

(72) Inventors:
• Le Leannec, Fabrice
  35250 Mouaze (FR)

• Onno, Patrice
  35000 Rennes (FR)
• Henocq, Xavier
  35520 Melesse (FR)
• Clare, Gordon
  35740 Pace (FR)

(74) Representative: Imbert de Tremiolles, Ghislain
Groupement de mandataires n°89
Santarelli
14 Avenue de la Grande Armée
75017 PARIS (FR)

(54) **Method and device for deblocking filtering of SVC type video streams during decoding**

(57)     A method and device for deblocking filtering of a scalable bitstream during decoding is disclosed. According to the invention, the decoding of at least one part of a picture encoded in a base layer and at least one enhancement layer in a scalable bitstream, the bitstream comprising at least one access unit representing the picture, each access unit comprising a plurality of data elements, each data element belonging to a said layer, comprises the reception (600) of at least one data element of said at least one access unit and, if said at least one data element belongs to an access unit of a predetermined type, the decoding (715, 820) of the data of said data element, and the application (720, 825) of a full deblocking filter to at least one part of the decoded data, the full deblocking filter being applied to all of the.

Fig. 8

**Description**

The present invention relates generally to decoding scalable bitstreams such as video streams of the SVC type and more specifically to a method and a device for deblocking filtering of scalable bitstream in a decoder having a fixed input buffer of small size.

H.264/AVC (advanced video coding) is a standard for video compression providing good video quality at a relatively low bit rate. It is a block-oriented compression using motion-compensation algorithms. It has been developed to be easily used in a wide variety of applications and conditions.

An extension of H.264/AVC is SVC (Scalable Video Coding) which aims to encode a high quality video bitstream into a plurality of scalability layers containing subset bitstreams. The subset bitstreams can be decoded with an H. 264/AVC decoder.

Each subset bitstream, representing a lower spatial or temporal resolution or a lower quality video, is derived from the main bitstream by discarding parts of it. Those subset bitstreams may be directly interpreted.

Functionally, the compressed video comprises a base layer and enhancement layers that provide additional information about quality, resolution or frame rate.

The video bitstream is made up of NAL units (Network Abstraction Layer units) representing the elementary container that forms a bitstream, and each enhancement layer corresponds to a set of identified NAL units. A set of successive NAL units that contribute to the decoding of one picture forms an access unit. To improve visual quality of decoded video, a deblocking filter is applied for smoothing sharp edges formed between decoded blocks. Therefore, the goal of the deblocking filter, in an H.264/AVC and SVC decoder, is to reduce the blocking artifacts that may appear on the boundaries of decoded blocks. It is a feature on both the decoding and encoding paths, so that the in-loop effects of the filter are taken into account in the blocks used as reference for prediction.

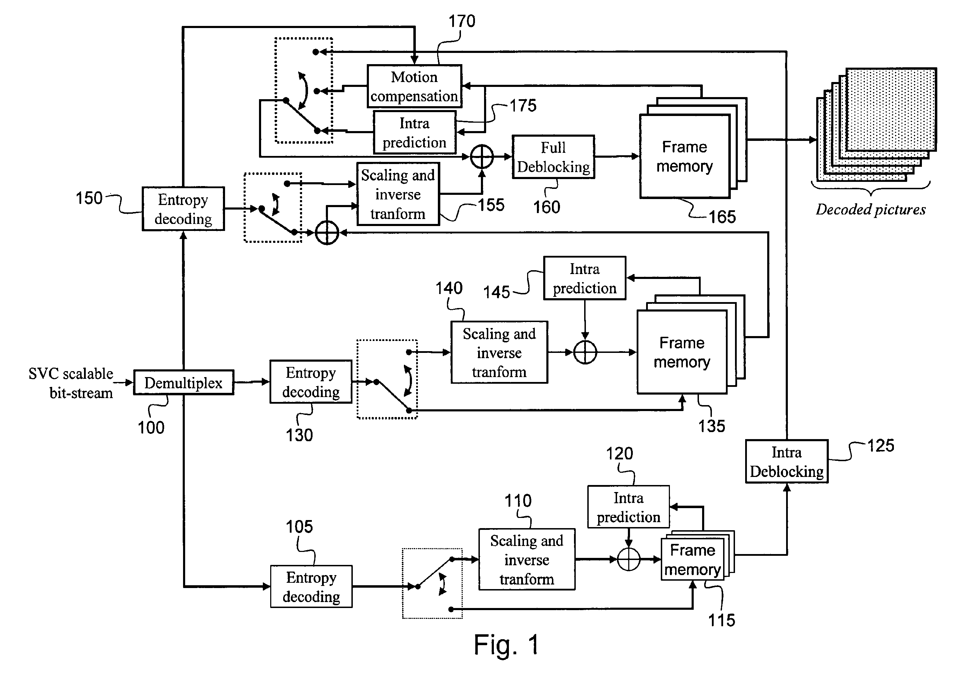

Figure 1 illustrates a diagram of the SVC decoding process that would apply to an SVC bitstream made of three scalability layers. More precisely, The SVC stream being decoded in Figure 1 is made of one base layer, a spatial enhancement layer, and an SNR (signal to noise ratio) enhancement layer (or quality layer) on top of the spatial layer. Therefore, the SVC decoding process comprises three stages, each of which handling items of data of the bitstreams according to the layer to which they belong. To that end, a demultiplexing operation is performed on the received items of data to determine in which stage they should be processed (100).

The first stage illustrated in Figure 1 concerns the base layer decoding process that starts by the entropy decoding of each macroblock (105), for example each 16x16 array of pixels, of each coded picture in the base layer. This entropy decoding provides the coding mode, the motion data (reference picture indexes, motion vectors of INTER coded macroblocks) and residual data. The residual data consists of the difference between the macroblock to be coded and the reference macroblock indicated by the motion vector, which has been transformed using a DCT and quantized.

Next, the quantized DCT coefficients undergo inverse quantization (termed scaling in the Figure) and inverse transform operations (110), in case the upper layer has a higher spatial resolution than the current one. In the example of Figure 1, the second layer of the stream has a higher spatial resolution than the base layer. Consequently, the inverse quantization and transform is activated in the base layer. Indeed, in SVC, the residual data is completely reconstructed in layers that precede a resolution change because the texture data has to undergo a spatial up-sampling process. On the contrary, the inter-layer prediction and texture refinement process is applied directly on quantized coefficients in the case of a quality enhancement layer.

Returning to Figure 1, the so-reconstructed residual data is then stored in the frame buffer 115. Moreover, INTRA coded macroblocks are fully reconstructed through well-known spatial INTRA prediction techniques (120).

Next, the decoded motion and temporal residual data for INTER macroblocks, and the reconstructed INTRA macroblocks are stored into a frame buffer 115 in the first stage of the SVC decoder of Figure 1. Such a frame buffer contains the data that can be used as reference data to predict an upper scalability layer.

Moreover, the inter-layer prediction process of SVC applies a so-called INTRA deblocking operation (125) on INTRA macroblocks reconstructed from the base layer of Figure 1. The INTRA deblocking consists in filtering the blocking artifacts that may appear at the boundaries of reconstructed INTRA macroblocks. This INTRA deblocking operation occurs in the inter-layer prediction process only when a spatial resolution change occurs between two successive layers. This is the case between the first and second layers in Figure 1.

Next, the second stage of Figure 1 performs the decoding of a spatial enhancement layer on top of the base layer decoded by the first stage. This spatial enhancement layer decoding involves the entropy decoding of the second layer (130), which provides the motion information as well as the transformed and quantized residual data for macroblocks of the second layer. With respect to INTER macroblocks, as the next layer (third layer) has the same spatial resolution as the second one, their residual data only undergoes the entropy decoding step and the result is stored in the frame memory buffer 135 associated with the second layer of Figure 1. Indeed, the residual texture refinement process is performed in the transform domain between the quality layers (or SNR layers) in SVC. There are two types of quality layers currently defined in SVC, namely CGS layers (Coarse Grain Scalability) and MGS layers (Medium Grain Scalability).

A CGS layer in SVC is quite similar to a spatial layer except it does not increase the spatial resolution of the sequence but its quality. In the coding/decoding processes of a CGS enhancement layer, a texture and motion vector up-sampling process is omitted, whereas is applied in case of a spatial enhancement layer.

An MGS layer is also a quality enhancement layer. A difference compared with a CGS layer is that it is possible for an MGS layer to be only partially decoded, which is not the case for a CGS layer. The partial decoding of an MGS layer consists in omitting the decoding of some of its coded pictures. In that case, the discarded pictures of the MGS layer are replaced by the temporally coincident picture of the lower quality layer of the considered MGS layer. This leads to a decoded sequence with an intermediate visual quality between the MGS layer and its lower quality layer. MGS has been designed to bring an increased quality granularity compared to CGS.

Concerning INTRA macroblocks, their processing depends upon the type of INTRA macroblocks. In case of inter-layer predicted INTRA macroblocks (I_BL coding mode), the result of the entropy decoding is stored in the frame memory buffer 135. In the case of a non I_BL INTRA macroblock, such a macroblock is fully reconstructed, through inverse quantization, and inverse transform (140) to obtain the residual data in the spatial domain, and then INTRA prediction (145) to obtain the fully reconstructed macroblock.

Finally, the decoding of the third layer of Figure 1, which is also the topmost layer of the considered stream, involves a motion compensated temporal prediction loop. The following successive steps are performed by the decoder to decode the sequence at the topmost layer,

- each macroblock first undergoes an entropy decoding process (150) which provides motion and texture residual data;
- if inter-layer residual prediction data is used for the current macroblock, this quantized residual data is used to refine the quantized residual data that issued from the reference layer, which is the second layer in the example. In this connection, it should be recalled that texture refinement is performed in the transform domain between layers that have the same spatial resolution;
- next, an inverse quantization and inverse transform is applied to this optionally refined residual data (155). This provides reconstructed residual data;
- in the case of INTER macroblocks, the decoded residual data refines the decoded residual data that issued from the base layer if inter-layer residual prediction was used to encode the second scalability layer;
- in the case of INTRA macroblocks, the decoded residual data is used to refine the prediction of the current macroblock;
- if the current macroblock is I_BL, then the decoded residual data can be used to further refine the residual data of the base macroblock, if it was coded in I_BL mode;
- the decoded residual data is then added to the temporal, INTRA or inter-layer INTRA prediction macroblock of the current macroblock, to provide the reconstructed macroblock. The inter-layer INTRA prediction is applied in case of I_BL INTRA macroblocks of the topmost layer, and consists in adding the decoded residual data to the inter-layer INTRA prediction of the current macroblock in the spatial domain, that issued from the base layer in the case of Figure 1;
- the reconstructed macroblock finally undergoes a so-called full deblocking filtering process (160), which is applied both to INTER and INTRA macroblocks, in contrast to the deblocking filter applied in the base layer which is applied only to INTRA macroblocks;
- the full deblocked picture is then stored in the Decoded Picture Buffer (DPB), represented by the frame memory 165 in Figure 1, which is used to store pictures that will be used as references to predict future pictures to decode (170 and 175). The decoded pictures are also ready to be displayed on a screen.

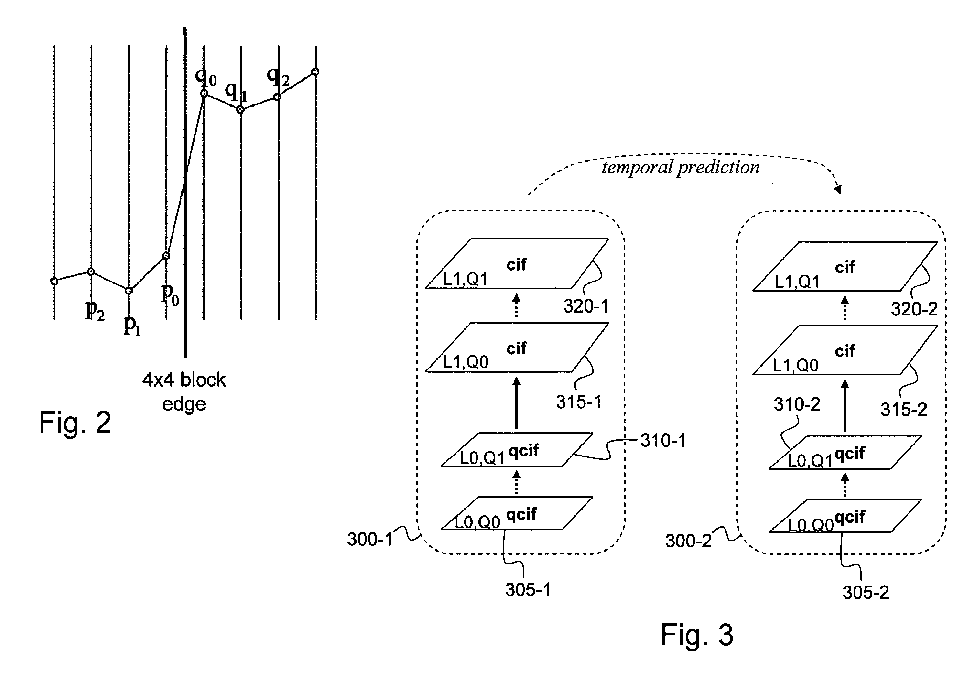

The deblocking filters are filters applied in the motion compensated prediction loop after decoding, and they are designed to reduce the blocking artefacts and therefore to improve the motion compensation and inter layer prediction processes. For the topmost decoded layer, the full deblocking is an enhancement filter applied to all blocks and aiming to improve the overall visual quality of the decoded picture. This full deblocking process, which is applied on complete reconstructed pictures, is identical to the adaptive deblocking process specified by the H.264/AVC non-scalable video compression standard, explained hereafter with reference to Figure 2.

It should be noted here that partial "INTRA deblocking" is applied in the base layer, and a full deblocking operation is applied to decoded pictures of the topmost layer. More generally, the deblocking filter in SVC is not applied in the same way in all scalability layers, and the following rules apply:

- in layers preceding a change in spatial resolution, INTRA deblocking is applied to reconstructed INTRA macroblocks;
- in layers different from the topmost layer and that do not precede a spatial resolution change (hence preceding a CGS or MGS layer), no deblocking is applied; and,
- in the topmost layer, full deblocking filtering is applied to the decoded pictures.

This is explained, for example, in the paper entitled "Overview of the Scalable Extension of the H.264/MPEG-4 AVC Video Coding Standard" (Heiko Schwarz, Detlev Marpe and Thomas Wiegand, IEEE Transactions on Circuits and Video Technology, Vol. 17, No.9, September 2007, Pages 1103-1120).

As a consequence, the functioning of the deblocking filter activation in SVC depends on the layered structure of the SVC bitstream being decoded. Moreover, in an SVC decoder implementation, the deblocking filtering, which is a time-consuming process, could be performed in parallel with other macroblock decoding operations. Thus, in such a case, the decoder has to be aware of the whole layered structure of the bitstream so as to launch the deblocking process, possibly in a dedicated thread, when necessary. This means that the decoder must know if the current layer precedes a spatial resolution change or is the topmost layer of the stream.

Figure 2 illustrates the way the deblocking filter works for decoding an SVC stream. As mentioned above, the goal of the deblocking filter is to attenuate the blocking artifacts that are naturally generated by a block-based video codec. The deblocking filter is an in-loop adaptive filter of which the filtering strength depends, among others, on the values of the reconstructed image pixels. For the sake of illustration, filtering along a one dimension array of pixels is illustrated in Figure 2. The way samples $p_0$ and $q_0$ are filtered depends upon the following conditions:

$$|p_0 - q_0| < \alpha(QP) \qquad \text{(eq. 1)}$$

$$|p_1 - p_0| < \beta(QP) \qquad \text{(eq. 2)}$$

$$|q_1 - q_0| < \beta(QP) \qquad \text{(eq. 3)}$$

To be precise, all the conditions of equations 1 to 3 have to be respected to filter samples $p_0$ and $q_0$. $\alpha(QP)$ and $\beta(QP)$ are thresholds calculated as a function of the quantization parameter QP. It should be noted that $\beta(QP)$ is much smaller than $\alpha(QP)$. Moreover, samples $p_1$ and $q_1$ are filtered if the following conditions are fulfilled:

$$|p_2 - p_0| < \beta(QP) \text{ or } |q_2 - q_0| < \beta(QP) \qquad \text{(eq. 4)}$$

The aim of conditions 1 to 4 is to detect real blocking artifacts and distinguish them from edges naturally present in the video source. Therefore, if a high absolute difference between samples near a boundary of a 4x4 block is calculated, it is likely to reflect a blocking artifact. However, if this absolute difference is too large, then this may not come from the coarseness of the quantization used, and it may rather reflect the presence of a natural edge in the video scene. More information on the deblocking filter process can be found in the paper entitled "Adaptive Deblocking Filter" (P. List, A. Joch, J. Lainema, G. Bjøntegaard, M. Karczewicz, IEEE Transactions on Circuits and Systems For Video Technology, Vol. 13, No. 7, July 2003, Pages 614-619). Indeed, this paper describes the deblocking filtering process as specified by the H.264/AVC video compression standard. Hence, in case of an SVC stream comprising multiple scalability layers, it corresponds to the deblocking process applied on the topmost layer's decoded pictures, also called full deblocking process herein.

Figure 3 schematically illustrates the functioning of an SVC decoder implementation with respect to the deblocking filter process. The two successive access units 300-1 and 300-2 are represented.

Each access unit consists of several NAL units or data elements, represented by the parallelograms 305-1 to 320-1 and 305-2 to 320-2 in Figure 3, each of which containing either coded picture data or coding parameters of the sequence or of some pictures of the sequence. Each illustrated NAL unit contains a coded slice in a scalability layer of the SVC bitstream, that is to say a representation of macroblocks forming a spatially distinct region of a picture that is encoded separately from other regions of the same picture. In the case of Figure 3, only one slice per picture is coded. Hence, a NAL unit represents the contribution of a scalability layer to an access unit.

For example, NAL unit 305-1 represents the first layer of the access unit 300-1, that is to say the base layer of the access unit, corresponding to the low resolution QCIF format (Quarter Common Image Format having a resolution of 176x144 pixels) and to the base quality. NAL unit 310-1 represents the second layer, that is to say the first enhancement layer, corresponding to the same QCIF resolution and to an enhanced quality. Likewise, NAL units 315-1 and 320-1 represent the third and fourth layers, that is to say the second and third enhancement layers, respectively, corresponding here to the higher CIF resolution format (Common Intermediate Format having a resolution of 352x288 pixels) and to the base and enhanced quality, respectively.

In the normal functioning of the SVC decoder, INTRA deblocking is performed on the decoded slice in the layer preceding a spatial resolution change. Therefore, INTRA deblocking is performed on NAL unit 310-1. This INTRA deblocking may be performed in parallel with the macroblock decoding process in the NAL unit considered, on account of decoding speed considerations.

Full deblocking is applied to the picture decoded in the topmost layer, corresponding, here, to NAL unit 320-1. Indeed, in this layer, the picture is fully decoded and serves both for the display and as a reference to predict subsequent pictures to decode in the motion compensated temporal prediction process. Again, the full deblocking may be performed in parallel with other decoding operations.

No deblocking filtering is applied to NAL units 305-1 and 315-1.

Alternatively, the header of NAL unit 315-1 can indicate that the base quality representation of this coded picture should be used as reference for the temporal prediction of a subsequent picture, through the motion compensated temporal prediction process. The aim of this SVC functionality, named base representation, is to make the SVC bitstream resilient to packet losses. More particularly, if NAL units from the non base quality representation of the reference picture are lost, then the next access unit remains decodable without any drift, thanks to the use of the base quality representation as the reference picture.

In that case, the base quality representation of the reference picture has to be decoded, in addition to the topmost layer representation of this reference picture. Moreover, a full deblocking filter is applied both to the decoded base quality (corresponding to NAL unit 315-1) and to the topmost representations of the reference picture (corresponding to NAL unit 320-1). In a preferred SVC decoder implementation, these two deblocking operations are performed in parallel with other decoding operations.

The parallel execution of the decoding and deblocking operations implies that the decoder knows when it starts decoding a NAL unit whether a deblocking operation is necessary in the layer the NAL unit belongs to.

In the SVC reference software called the JSVM (Joint Scalable Video Model), entire access units are loaded and pre-analyzed before starting to decode the current access unit. The end of the current access unit is detected when the first video coding layer NAL unit of the next access unit is loaded and detected. Hence, no input buffer with a fixed small size can be considered. As the whole first access unit is loaded and analyzed, the topmost layer in which the full deblocking filtering has to be performed is known before starting to decode the first access unit. With respect to the INTRA deblocking, a spatial resolution change detection process is repeated in each layer of each frame.

It is desirable, in some cases, to use a decoder having a fixed input buffer of small size, for example an input buffer having a size of 8192 bytes.

Such a constraint can be imposed on the H.264/AVC decoder for example to allow the decoder to be run on a low memory capacity device. The small input buffer is used to store successive small portions of an H.264/AVC bitstream which are then processed by the decoder to deliver reconstructed pictures. However, such a small buffer constraint raises some technical issues in the SVC decoder implementation. More particularly, the layered structure of the SVC stream is fully known only once the first access unit is fully decoded, or at least parsed. However, because of the small input buffer, it is not possible to store a full access unit before starting to decode it. As a result, the layered structure of the SVC bitstream is not completely known when starting decoding the sequence. This makes it difficult to manage the SVC decoding operations that depend on the scalable structure of the bitstream.

In particular, the management of the deblocking filtering operations greatly depends on the organization of the SVC bitstream in terms of spatial and quality layers.

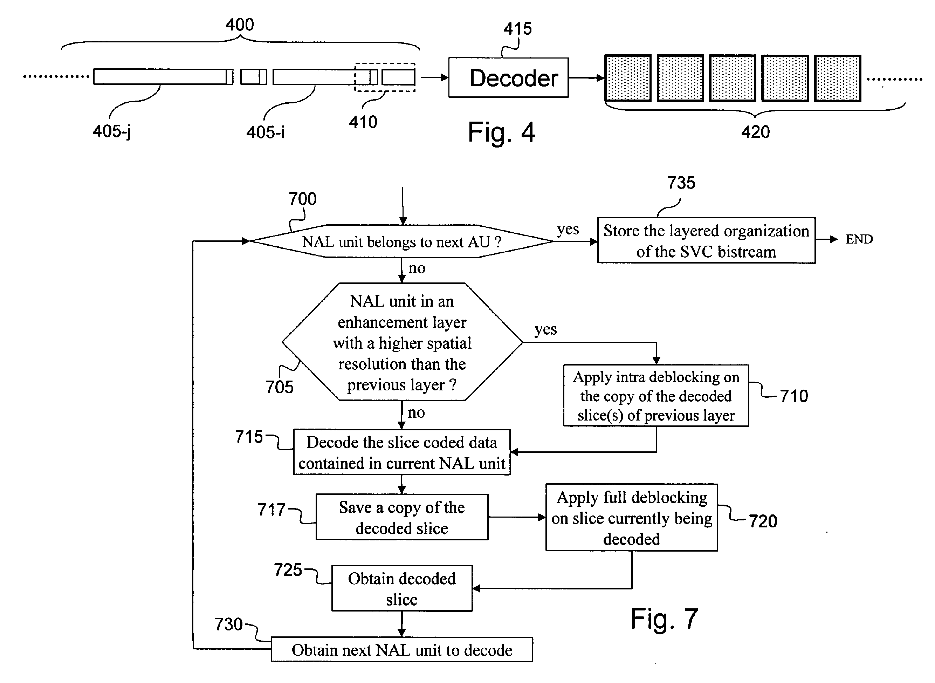

Figure 4 illustrates the architectural constraint imposed in the design of an SVC decoder. As can be seen, the SVC bitstream 400 consists of a series of NAL units 405-i, 405-j that are successively given to the decoder 415, which processes them and outputs a sequence of decoded pictures 420. However, the input NAL unit reading process uses an input buffer 410 with a fixed and limited size (typically 8192 bytes).

This buffer loads successive bitstream portions into memory and provides the SVC decoder 415 with such fixed sized bitstream chunks. As a result, such a loaded bitstream portion may contain a portion of a single NAL unit or up to several NAL units, depending on the size of the NAL units, which is highly variable. For example, in Figure 4, the data chunk currently being loaded contains the end of a NAL unit and the beginning of the following one.

Since the full knowledge of the layered structure of a bitstream is obtained when all NAL units of the first access unit have been read and parsed, the SVC decoder does not know this structure until it has loaded and processed all NAL units in the first access unit.

On the contrary, it loads the NAL units of the first access unit, and progressively discovers the layered organization of the SVC bitstream while it processes the first access unit. It detects the end of the first access unit when it finds a NAL unit that starts a new access unit in the bitstream.

As a result, when decoding the first access unit, the decoder knows neither which layers precede a spatial resolution change, nor which layer is the topmost layer. Therefore, it is not possible to run the deblocking process in parallel as described above, when decoding the first picture of the bitstream.

The invention notably enables deblocking filtering of a video stream of the SVC type in an SVC decoder having a fixed input buffer of small size.

The invention thus relates to a method of decoding at least one part of a picture encoded in a base layer and at least one enhancement layer in a scalable bitstream, said bitstream comprising at least one access unit representing said picture, each said at least one access unit comprising a plurality of data elements, each said data element belonging to a said layer, the method comprising the following steps:

- receiving at least one data element of said at least one access unit; and,
- if said at least one data element belongs to an access unit of a predetermined type:

  o decoding the data of said data element to provide decoded data; and,
  o applying a full deblocking filter to at least one part of said decoded data, said full deblocking filter being applied to all of said layers.

The deblocking filter is thus applied specifically for predetermined pictures of a sequence, to all layers. Therefore, according to the invention, the decoder can have a fixed input buffer of small size, since it is no longer necessary to know the layered structure of the bitstream before applying the deblocking filter.

According to a particular aspect, the steps of decoding and applying full deblocking are performed if the data element belongs to an access unit which is associated with a picture for which the structure of the scalable bitstream can change.

The scalable bitstream can be of the SVC type while the access unit of the predetermined type can be associated with an image of the IDR (Instantaneous Decoder Refresh) type.

According to a preferred embodiment, said steps of decoding the data of said data element and of applying a full deblocking filter to said at least one part of said decoded data are performed substantially simultaneously in two different threads so as to optimize the decoding process, and particularly so as to improve the decoding speed.

Still according to a particular embodiment, the method further comprises the step of memorizing the layered organization of the bistream for optimizing deblocking steps of following pictures of the bitstream, so allowing the decoder to know in advance in which layers the full and intra deblocking processes have to be applied when processing subsequent pictures of the bitstream.

The method preferably comprises the further steps of determining if said data element belongs to a said at least one enhancement layer of which the resolution is higher than the layer below and applying a partial deblocking filter to previously decoded data belonging to said layer below. This makes it possible to conform with the SVC normative decoding process since the SVC standard specifies that a partial deblocking filter has to be applied on scalability layers that precede a spatial resolution increase.

Still according to a particular embodiment, the method further comprises the steps of receiving at least one data element of a second access unit, different from said at least one access unit and of:

- decoding the data of said data element of said second access unit to provide decoded data of said second access unit;
- if said at least one data element of said second access unit belongs to the topmost layer of said access unit, applying a full deblocking filter to at least one part of said decoded data of said second access unit; and,
- if said data element of said second access unit belongs to a said at least one enhancement layer of which the resolution is below than that of the layer above, applying an intra deblocking filter to at least one part of said decoded data of said second access unit.

Accordingly, the full deblocking filter is only applied to the layer necessary for subsequent access units. Furthermore, the intra deblocking filter is applied at the end of the decoding of the scalability layer currently being processed, and not when starting decoding the upper layer.

Still according to a particular embodiment, the method further comprises the step of applying a full deblocking filter to at least one part of the picture being decoded if said picture being decoded is used as a reference picture for a motion compensated temporal prediction of at least one other picture.

Therefore, the method of the invention conforms with the SVC normative decoding process as applied to so-called SVC key pictures in which base quality representation of the highest spatial layer is used as the reference picture for the motion compensated temporal prediction of further pictures to decode.

Still according to a further embodiment, the step of applying a full deblocking filter to at least one part of the picture being decoded and the decoding step of said data element of said second access unit are performed substantially simultaneously to optimize bitstream decoding in terms of decoding speed.

It is another object of the invention to provide a computer program comprising instructions for carrying out each step of the method described above when the program is loaded and executed by a programmable apparatus.

It is still another object of the invention to provide an information storage means readable by a computer or a microprocessor storing instructions of a computer program that makes it possible to implement a method of decoding at least one part of a picture encoded in a base layer and at least one enhancement layer in a scalable bitstream according to the method described above.

It is a particular object of the invention to provide a device for decoding at least one part of a picture encoded in a base layer and at least one enhancement layer in a scalable bitstream, said bitstream comprising at least one access unit representing said picture, each said at least one access unit comprising a plurality of data elements, each said data element belonging to a said layer, the device comprising the following means:

- means for receiving at least one data element of said at least one access unit; and,
- means for decoding the data of said data element to provide decoded data and applying a full deblocking filter to at least one part of said decoded data if said at least one data element belongs to an access unit of a predetermined type, the full deblocking filter being applied to all of said layers.

The deblocking filter is thus performed specifically for predetermined pictures of a sequence. Therefore, according to the invention, the decoder can have a fixed input buffer of small size. Furthermore, the architecture of the decoder is not substantially modified and the decoding of the macroblocks in IDR pictures can still be done simultaneously to their deblocking.

The scalable bitstream can be of the SVC type while the access unit of the predetermined type can be associated with an image of the IDR type.

According to a particular embodiment, said means for decoding the data of said data element and applying a full deblocking filter to said at least one part of said picture being decoded are adapted to execute the decoding and filtering steps in two different parallel threads for optimizing bitstream decoding.

Still according to a particular embodiment, the device further comprises means for determining if said data element belongs to a said at least one enhancement layer of which the resolution is higher than the layer below and applying an intra deblocking filter to previously decoded data belonging to said layer below.

Still according to a particular embodiment, the device further comprises means for receiving at least one data element of a second access unit, different to said at least one access unit and the following means:

- means for decoding the data of said data element of said second access unit to provide decoded data of said second access unit;
- means for determining whether said at least one data element of said second access unit belongs to the topmost layer of said at least one enhancement layer and, if so, applying a full deblocking filter to at least one part of said decoded data of said second access unit; and,
- means for determining whether said data element of said second access unit belongs to a said at least one enhancement layer of which the resolution is below than that of the layer above and, if so, applying an intra deblocking filter to at least one part of said decoded data of said second access unit.

Further advantages of the present invention will become apparent to the ones skilled in the art upon examination of the drawings and detailed description. It is intended that any additional advantages be incorporated herein.

**Figure 1,** already described, illustrates a diagram of the SVC decoding process that would apply to an SVC bitstream made of three scalability layers.

**Figure 2,** already described, illustrates the way the deblocking filter works for decoding an SVC stream.

**Figure 3,** already described, schematically illustrates the functioning of an SVC decoder implementation with respect to the deblocking filter process.

**Figure 4,** already described, illustrates the architectural constraint imposed on the design of an SVC decoder.

**Figure 5** provides an example of the parallel execution of the decoding and deblocking processes on a picture.

**Figure 6** illustrates an example of the overall NAL unit decoding algorithm as implemented according to this invention.

**Figure 7** illustrates an example of a basic embodiment to handle the deblocking filter operations in the IDR access units of an SVC bitstream to decode.

**Figure 8** illustrates a preferred embodiment of the invention to handle the deblocking filter operations in the IDR access units of an SVC bitstream to decode.

**Figure 9** illustrates an example of an apparatus making it possible to implement the invention;

A deblocking filter is applied when decoding a bitstream of the SVC type, to reduce the blocking artifacts that may appear on the boundaries of decoded blocks, in each of the following cases:

- full deblocking is applied to the decoded pictures of the topmost layer, which are displayed and also used as reference pictures for the motion compensated (MC) temporal prediction of subsequent pictures;
- partial deblocking, called INTRA deblocking hereinafter, is applied to the decoded INTRA macroblocks, in layers that precede a spatial enhancement layer;
- in the spatial level being decoded, when so called SVC key-pictures are used, the base quality reconstructions of these key-pictures are used as reference pictures for the motion compensated prediction of subsequent pictures. In this case, a full deblocking filter is applied to these decoded base quality pictures.

As the hierarchy of the bitstream is unknown when decoding the first access unit, a specific deblocking filter strategy has been implemented for the first access unit. It consists in performing full deblocking filtering on decoded pictures of all scalability layers of the first access unit. Moreover, the INTRA deblocking operation is performed each time a spatial resolution change is detected during the decoding of the first access unit. In that case, the INTRA deblocking is applied to the reconstructed picture of the layer that has just been decoded. The INTRA deblocking is performed before starting decoding the new layer in the new spatial level.

For subsequent access units, as the layered structure is known, the full deblocking filter is applied only to the topmost layer, and the INTRA deblocking is run in layers preceding a spatial resolution change, during the decoding of these preceding layers.

It should be noted that the specific deblocking process provided for the first access unit is well adapted to a parallel execution of the macroblock decoding and the full and INTRA deblocking processes. Indeed, these operations are pipe-lined and run in separate threads in the preferred H.264/AVC and SVC decoder implementations. This leads to a high decoding speed. Finally, the specific deblocking strategy described above is repeated each time an IDR (instantaneous decoder refresh) access unit is decoded, because the structure of the scalable bitstream can change at each IDR picture.

According to the invention, the two main following steps are applied during the decoding of the first picture of an SVC bitstream corresponding to the first access unit composed of NAL unit data elements:

- performing the INTRA deblocking filtering operation sequentially in the first picture, once a spatial resolution change is detected, that is to say when starting to process the NAL unit of the next layer with the new increased spatial resolution;
- performing the full deblocking filtering in all layers in the first picture.

As described hereinafter, the decoding and deblocking operations are performed sequentially, in a first embodiment, that is to say the full deblocking filter is applied to the entire decoded slice that issued from the decoding operation, once this decoding is finished. However, in a preferred embodiment, the full deblocking filtering is performed in parallel with macroblock decoding operations for a fast SVC decoder implementation. As a result, the computational time linked to the second steps above is here limited thanks to the parallel execution of the deblocking filter. The parallel execution of the decoding and deblocking typically consists in a pipe-lined execution, where the deblocking process waits for available reconstructed macroblocks before processing them. Indeed, the macroblock decoding process precedes the deblocking process. However, this parallel processing provides a high overall decoding speed, as the decoder does not wait for the decoded slice to be entirely available before applying the deblocking filter to it.

Moreover, the synchronous (or sequential) INTRA deblocking by the first step above temporarily pauses the decoding process of the NAL unit in the layer with the new spatial resolution level. This has a cost in terms of decoding speed, which is limited for the following reasons: the picture size in the layer preceding the spatial level change is lower compared to the full resolution of the sequence. Typically, in the case of dyadic spatial scalability, the size of the picture in the picture preceding the spatial resolution is four times smaller than the picture size in the higher spatial level. Next, once the first access unit of the sequence has been decoded according to the above strategy, the deblocking strategy is normally applied to subsequent access units, that it to say simultaneously with the macroblock deblocking process in the preferred embodiment of the invention.

In addition, it should be noted that additional full deblocking is also applied to the base quality representation of the topmost spatial level, in case this base quality representation is marked as a reference picture for the temporal prediction of future pictures to decode, for access units different from the first one.

As mentioned above, the specific deblocking method of the invention is applied to the first picture of SVC bitstreams. Moreover, if an SVC bitstream contains several IDR access units, then the layered structure of the bitstream is likely to change at each IDR picture. As a consequence, the decoder has to discover a potentially new layered structure of the bitstream each time it encounters an IDR picture in the sequence.

Considering the access units of Figure 3, the macroblock decoding operations and the full deblocking filtering are applied to NAL units 305-1 to 320-1 if the access unit 300-1 is an IDR access unit. Furthermore, an INTRA deblocking filter is synchronously applied to the NAL units 315-1 and 310-1.

If the access unit 300-2 is not an IDR access unit, the macroblock decoding operations are applied to each of NAL units 305-2 to 320-2 while the full deblocking filtering is applied in parallel to the decoding process only to NAL unit 320-2 and NAL unit 315-2 if it is marked as a reference picture for the temporal prediction of future pictures to decode. An INTRA deblocking filtering is applied to NAL 310-2.

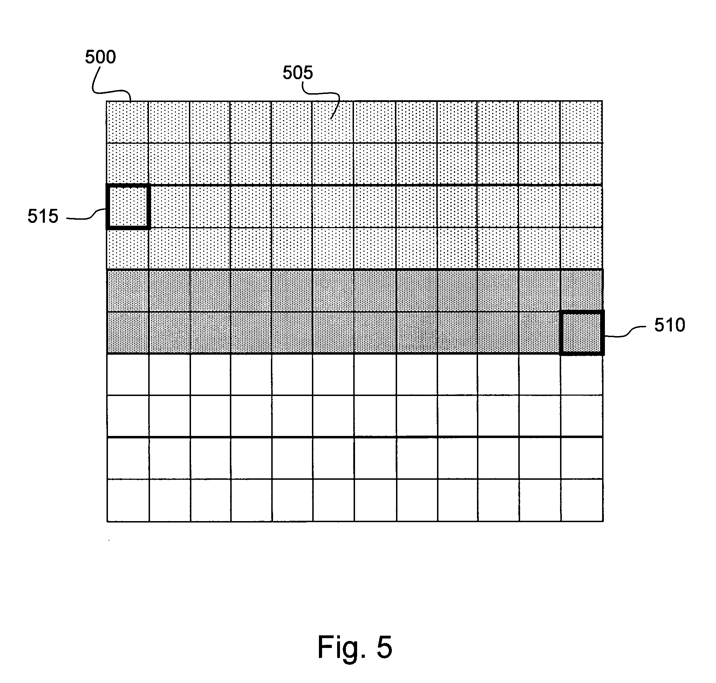

Figure 5 provides an example of the parallel execution of the decoding and deblocking processes on the picture 500 that is divided here into 16x16 macroblocks, generically referenced 505.

As previously introduced, the parallel execution of the macroblock decoding and deblocking processes consists in a pipelined architecture. This means that the deblocking filter waits for a certain number of macroblocks to be available in their decoded form before processingthem. This is necessary because the deblocking filter is applied on the borders of the macroblocks. Therefore, when processing a given macroblock, the decoded neighboring macroblocks of the current macroblock must also be available.

In the example of Figure 5, the decoding process processes two lines of macroblocks, before activating the deblocking filter process. Once two lines of decoded macroblocks are available, the deblocking filter is activated so as to process the previous set of two lines of decoded macroblocks. Indeed, Figure 5 shows the decoding process position 510 and the deblocking process position 515 of the picture 500 when the deblocking process is being activated. More precisely, Figure 5 emphasizes the last macroblock that has just been treated by the decoding process, as well as the first macroblock that is going to be deblocked when activating the deblocking process.

As the deblocking is always "behind" the decoding process with a delay of two lines of macroblocks, all the neighboring macroblocks of the macroblocks being deblocked are always available in their decoded version.

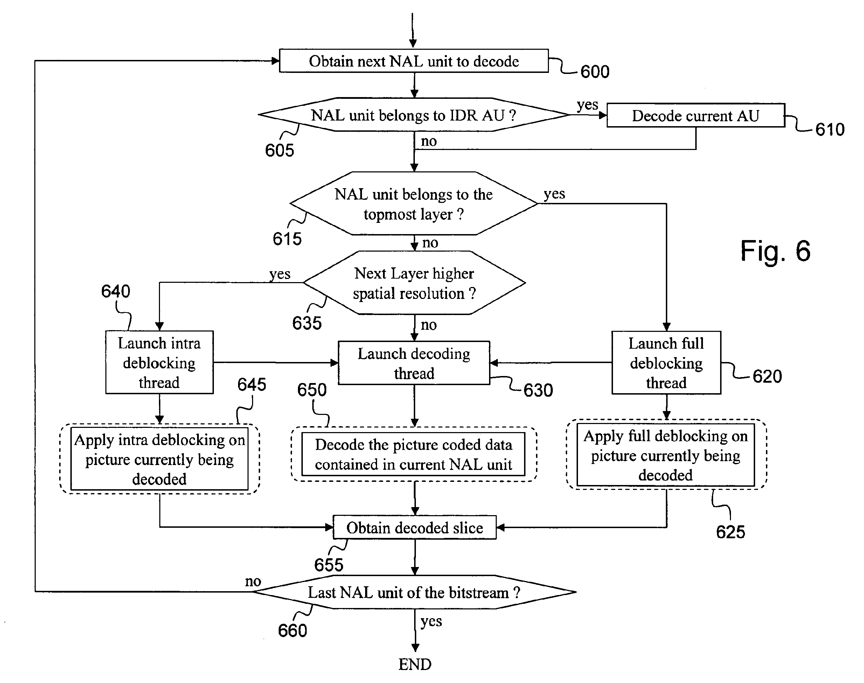

Figure 6 illustrates an example of the overall NAL unit decoding algorithm as implemented according to the invention. Each NAL unit of the bitstream, being a data element of an access unit of the bitstream, is successively processed.

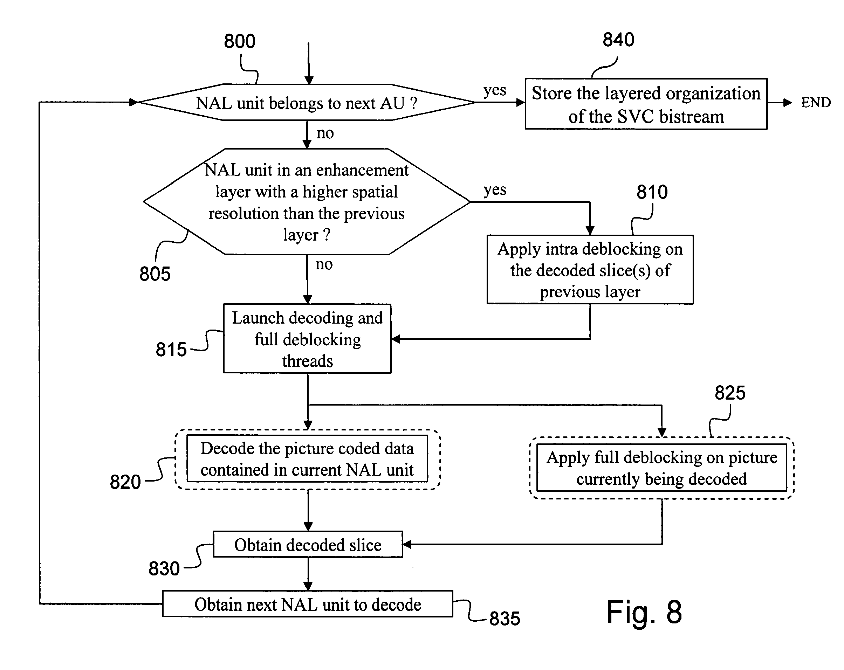

After having received the next NAL unit to decode (step 600), which is the first one at the beginning of the process, a test is performed to determine whether the current NAL unit being processed belongs to an access unit of the IDR type or not (step 605). Indeed, an access unit of the IDR type corresponds to an IDR picture at which the scalable structure of the bitstream can change. To that end, the *idr_flag* and the *nal_unit_type* syntax elements contained in the header of the NAL unit are analyzed. If the *idr_flag* element is set or if the *nal_unit_type* field is equal to five, this means that the current NAL unit belongs to an IDR access unit. In such a case, a specific decoding process for IDR access units is invoked (step 610). This particular IDR picture decoding is described by reference to Figure 7 or 8. Once the processing of the IDR picture is achieved, the decoder moves to the next access unit, and the NAL unit that is being considered by the algorithm corresponds to the first NAL unit in the access unit following the IDR access unit that has been decoded. The algorithm then returns to step 615.

If the current NAL unit being processed does not belong to an IDR access unit, it is checked to determine whether it belongs to the topmost layer of the SVC bitstream or not (step 615). Indeed, at this stage, the decoder is able to know if it has reached the highest layer before decoding the NAL unit, since the layered structure of the bitstream has been discovered and stored by the algorithm described by reference to Figure 7 or 8, during the processing of the last IDR access unit (Figure 7 corresponds to the basic processing applied to IDR access units while Figure 8 corresponds to the processing applied to IDR access units in a preferred embodiment).

If the current NAL unit is in the topmost layer, a full deblocking operation is applied to the picture being decoded (steps 620 and 625). In such a case, the decoder launches a thread dedicated to the parallel execution of the full deblocking filter so that the deblocking filter is applied at least partially at the same time as the decoding process. Once this thread is launched, the algorithm goes to the decoding thread launching step (step 630).

If the current NAL unit is not in the topmost layer, another test is performed to determine whether the next layer in the SVC bitstream layered organization has a higher spatial resolution than that of the current NAL unit or not (step 635). To this end, the knowledge of the bitstream layered organization that has been stored during step 735 of Figure 7 or 840 of Figure 8 is used. If this is the case, the decoder launches a thread dedicated to the execution in parallel of the INTRA deblocking of the picture being decoded (steps 640 and 645). Once this INTRA deblocking thread has been launched, the algorithm goes to the decoding thread launching step (step 630).

If the next layer in the SVC bitstream layered organization does not have a higher spatial resolution than that of the current NAL unit, the algorithm goes to the next step that consists in launching a thread dedicated to the decoding of the coded slice contained in the current NAL unit (steps 630 and 650). In this embodiment, this decoding step is performed in parallel with the INTRA or full deblocking process, if such a process is activated for the current NAL unit. The execution in parallel of the decoding and deblocking typically consists in a pipe-lined execution, where the deblocking process waits for available reconstructed macroblocks before processing them. Indeed, the macroblock decoding process precedes the deblocking process. This parallel processing provides a high overall decoding speed, as the decoder does not wait for the decoded slice to be entirely available before applying the deblocking filter to it.

Once all the parallel decoding and deblocking threads have processed all macroblocks in the considered slice, the decoded slice is obtained (step 655).

A test is then performed to determine whether the current NAL unit is the last NAL unit of the bitstream or not (step 660). If the current NAL unit is not the last NAL unit of the bitstream, the preceding steps are repeated (steps 600 to 660) else the algorithm ends.

Figure 7 illustrates an example of a basic embodiment to handle the deblocking filter operations in the IDR access units of an SVC bitstream to decode. According to this embodiment, the execution of the macroblock decoding and the full deblocking filtering operations are performed sequentially.

The algorithm illustrated in Figure 7 is invoked by the algorithm of Figure 6 when a NAL unit that belongs to an IDR access unit is loaded. Hence, when starting the execution of the algorithm of Figure 7, a NAL unit which is part of an IDR access unit has been loaded and is supplied to this algorithm.

A first step consists in performing a test to determine whether the current NAL unit being processed belongs to the next access unit that follows the current IDR access unit or not (step 700). The goal of this test is to detect whether the algorithm has reached a new access unit. It simply consists in checking whether the layer to which the last loaded NAL unit belongs corresponds to the base layer of the SVC bitstream. This is the case if the *dependency_id* and *quality_id* fields of the NAL unit header are both equal to zero or if the *nal_unit_type* field is equal to one or five, and if the decoder has already processed at least one NAL unit of the current IDR access unit through the application of steps 705 to 730. If the current NAL unit being processed belongs to the next access unit that follows the current IDR access unit, this means the decoder has encountered the next access unit. The algorithm then stores (step 735) the layered organization of the considered bitstream it has discovered during the execution of the algorithm of Figure 7, and returns to the algorithm illustrated in Figure 6.

If the current NAL unit being processed does not belong to the next access unit that follows the current IDR access unit, another test is performed to determine whether the NAL unit belongs to an enhancement layer which has a higher spatial resolution than the previous layer or not (step 705). If the NAL unit belongs to an enhancement layer which has a higher spatial resolution than the previous layer, the INTRA deblocking filter is applied to the decoded slice that issued from the previous layer (step 710). The INTRA deblocking is performed sequentially, and is not run within a separate thread as is the INTRA deblocking applied to non-IDR pictures.

It should be noted that such INTRA deblocking filtering is applied to a copy of the decoded slice resulting from the application of step 715 to the NAL unit of the previous layer. In particular, this copy has not undergone any deblocking process before applying the INTRA deblocking process to it at step 710.

After the INTRA deblocking filter is applied, the algorithm goes to the decoding step (step 715).

Next, the algorithm stores a copy of the so-decoded slice at step 717. This copy will be used afterwards when processing the next scalability layer of the bitstream, in case a spatial resolution change is detected between the current layer and the next one. Indeed, in that case, the copied decoded slice will undergo an INTRA deblocking process before starting to decode the next enhancement layer. Such a copy is necessary because the application of the INTRA deblocking leads to a different result from the full deblocking which is applied later in the algorithm.

After the decoding and copy operations have been performed, the algorithm goes to the full deblocking step (step 720). This full deblocking process is applied to the decoded slice that issued from the decoding step 715.

If the NAL unit does not belong to an enhancement layer which has a higher spatial resolution than the previous layer, the algorithm proceeds directly to the decoding and deblocking steps (steps 715 and 720).

As illustrated in Figure 7, these two steps are performed sequentially. The decoding of the whole slice is performed (step 715) and then the full deblocking filter is applied to the decoded slice (step 720). As the full deblocking filter is applied to all scalability layers, this leads to a complexity increase compared to the full deblocking filtering strategy employed for non IDR pictures. However, this computational cost is restricted to IDR pictures.

Once the decoding and full deblocking steps have finished processing the slice contained in the current NAL unit, the algorithm obtains the current slice of the IDR picture in its decoded and deblocked version (step 725).

This current slice is ready to be displayed if it belongs to the topmost layer of the bitstream. Otherwise, it is kept in memory to be used for the subsequent decoding of the following scalability layer.

Then, the next NAL unit to decode is loaded from the input SVC bitstream (step 730) and the algorithm is branched to the step of detecting whether the loaded NAL unit corresponds to the beginning of a new access unit (step 700).

As a result of the algorithm of Figure 7, the decoded and deblocked slice that issued from the topmost layer corresponds to the IDR picture in its final reconstructed version. Moreover, while processing an IDR picture, the algorithm of Figure 7 stores (step 735) which layers bring a change in spatial resolution and which layer is the topmost one. This knowledge of the layered organization of the SVC bitstream is kept by the decoder, and is re-used for subsequent processing of access units by the algorithm of Figure 6.

Figure 8 illustrates a preferred embodiment of the invention to handle the deblocking filter operations in the IDR access units of an SVC bitstream to decode.

This algorithm is invoked by the algorithm illustrated in Figure 6 when it loads a NAL unit that belongs to an IDR access unit. Hence, when starting the execution of the algorithm of Figure 8, a NAL unit which is part of an IDR picture has been loaded and is provided to this algorithm.

A first step consists in determining whether the current NAL unit being processed belongs to the next access unit that follows the current IDR access unit or not (step 800). The aim of this test is to detect whether the algorithm has reached a new access unit. It simply consists in checking if the layer to which the last loaded NAL unit belongs corresponds to the base layer of the SVC bitstream. As described above, this is the case if the *dependency_id* and *quality_id* fields of the NAL unit header are both equal to zero, and if the decoder has already processed at least one NAL unit of the current IDR access unit through the application of steps 805 to 830. If the current NAL unit being processed belongs to the next access unit that follows the current IDR access unit, this means the decoder has encountered the next access unit. The algorithm then stores (step 840) the layered organization of the bitstream it has discovered during the execution of steps 805 to 835. Then the algorithm ends and returns to the algorithm of Figure 6.

If the current NAL unit being processed does not belong to the next access unit that follows the current IDR access unit, another test is performed to determine whether the NAL unit belongs to an enhancement layer which has a higher spatial resolution than the previous layer or not (step 805). If the NAL unit belongs to an enhancement layer which has a higher spatial resolution than the previous layer, an INTRA deblocking filtering operation is applied to the decoded slice that issued from the previous layer (step 810). The INTRA deblocking filtering operation is performed sequentially, and is not run within a separate thread as is the INTRA deblocking applied to non-IDR pictures. Once this INTRA deblocking filtering operation is done, the algorithm goes to the step of launching the decoding and full deblocking threads (step 815).

If the NAL unit does not belong to an enhancement layer which has a higher spatial resolution than the previous layer, the algorithm directly goes to the step of launching the decoding and deblocking threads (step 815). As illustrated, this step consists in activating the two separate threads relating to macroblock decoding and full deblocking filtering (steps 820 and 825, respectively).

As illustrated in Figure 8, and in contrast to the basic embodiment described by reference to Figure 7, these two steps are performed in parallel, in separate threads. As explained above with reference to Figure 6, this parallel process involves pipe-lined processing, where the deblocking filter progressively handles macroblocks as long as they are being delivered in their decoded version by the macroblock decoding thread.

As can be noted, the algorithm illustrated in Figure 8 applies the full deblocking filter to all decoded slices in all scalability layers in the IDR access unit. However, the speed penalty linked to this parallel full deblocking is less than sequentially performing the full deblocking only in layers where it is needed. As a result, this preferred embodiment provides a faster solution to performing the decoding and deblocking operations in IDR pictures than prior art solutions, like the JSVM for example, while being compatible with a fixed input buffer of small size.

Once the decoding and full deblocking threads have finished processing the slice contained in the current NAL unit, the algorithm obtains the current slice of the IDR picture in its decoded and deblocked version (step 830).

This current slice is ready to be displayed if it belongs to the topmost layer of the bitstream. Otherwise, it is kept in memory to be used for the subsequent decoding of the following scalability layer.

Then, the next NAL unit to decode is loaded from the input SVC bitstream, and the algorithm returns to the first step which detects whether the loaded NAL unit corresponds to the beginning of a new access unit or not (step 800.

As a result of the algorithm of Figure 8, the decoded and deblocked slice that issued from the topmost layer corresponds to the IDR picture in its final reconstructed version. Moreover, while processing an IDR picture, the algorithm of Figure 8 stores (step 840) which layers bring a change in spatial resolution and which layer is the topmost one. This knowledge of the layered organization of the SVC bitstream is kept by the decoder, and is re-used for subsequent access units by the algorithm illustrated in Figure 6.

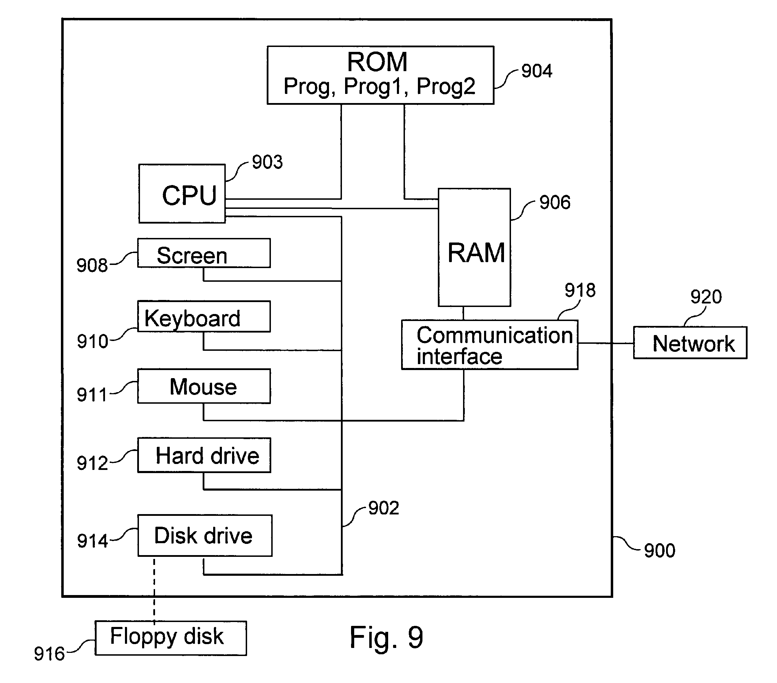

An apparatus implementing the invention is illustrated in Figure 9. The device 900 is for example a micro-computer, a workstation, a personal digital assistant, or a mobile telephone.

The apparatus 900 comprises a communication bus 902 to which there are connected:

- a central processing unit or microprocessor 903 (CPU);
- a read-only memory 904 (ROM) able to contain the programs "Prog", "Prog1" and "Prog2";
- a random access memory or cache memory (RAM) 906, comprising registers adapted to record variables and parameters created and modified during the execution of the aforementioned programs; and,
- a communication interface 918 connected to a distributed communication network 920, for example the Internet, the interface being able to transmit and receive data.

Optionally, the apparatus 900 may also have:

- a screen 908 for viewing data and/or serving as a graphical interface with the user, who will be able to interact with the programs according to the invention, using a keyboard 910 or any other means such as a pointing device, for example a mouse 911, an optical stylus, a touch screen or a remote control device;

- a hard disk 912 able to contain the aforementioned programs "Prog", "Prog1" and "Prog2" and data processed or to be processed according to the invention;
- a disk drive 914 adapted to receive a floppy disk 916 and to read or write thereon data processed or to be processed according to the invention; and,
- a reader for memory cards adapted to read or write thereon data processed or to be processed according to the invention.

The communication bus affords communication and interoperability between the different elements included in the apparatus 900 or connected to it. The representation of the bus is non-limiting and, in particular, the central processing unit is capable of communicating instructions to any element of the apparatus 900 directly or by means of another element of the apparatus 900.

The executable code of each program enabling the programmable apparatus to implement the processes according to the invention may be stored, for example, on the hard disk 912 or in read-only memory 904.

According to a variant, the floppy disk 916 can contain data as well as the executable code of the aforementioned programs which, once read by the apparatus 900, will be stored on the hard disk 912.

As a second variant, the executable code of the programs can be received by the intermediary of the communication network 920, via the interface 918, in order to be stored in an identical fashion to that described previously.

The floppy disks can be replaced by any information carrier such as a compact disc (CD-ROM) or a memory card. Generally, the floppy disks may be replaced by information storage means, which can be read by a computer or microprocessor, integrated or not into the apparatus, which may possibly be removable, and which are adapted to store one or more programs whose execution permits the implementation of the method according to the invention.

More generally, the program or programs may be loaded into one of the storage means of the apparatus 900 before being executed.

The central processing unit 903 will control and direct the execution of the instructions or portions of software code of the program or programs according to the invention, these instructions being stored on the hard disk 912 or in the read-only memory 904 or in the other aforementioned storage elements. On powering up, the program or programs which are stored in a nonvolatile memory, for example the hard disk 912 or the read-only memory 904, are transferred into the random-access memory 906, which then contains the executable code of the program or programs according to the invention, as well as registers for storing the variables and parameters necessary for implementation of the invention.

It should be noted that the communication apparatus comprising the device according to the invention can also be a programmed apparatus. This apparatus then contains the code of the computer program or programs for example fixed in an application specific integrated circuit (ASIC).

Naturally, in order to satisfy local and specific requirements, a person skilled in the art may apply many modifications and alterations to the solution described above, all of which, however, are included within the scope of protection of the invention as defined by the following claims.

In particular, even though described in the context of deblocking filtering, the invention more generally relates to any post-processing process that would aim at enhancing the visual quality of decoded pictures of a scalable video stream, and which applies differently on access units of predetermined types, such as the images of IDR type. For example, according to an alternative embodiment, such post processing process could take the form of an error concealment process, which would apply on completely reconstructed pictures of the topmost layer, similarly to the full deblocking.

**Claims**

1.   A method of decoding at least one part of a picture encoded in a base layer and at least one enhancement layer in a scalable bitstream, said bitstream comprising at least one access unit representing said picture, each said at least one access unit comprising a plurality of data elements, each said data element belonging to a said layer, the method being **characterized in that** it comprises the following steps:

   - receiving (600) at least one data element of said at least one access unit; and,
   - if said at least one data element belongs (605) to an access unit of a predetermined type:

      o decoding (715, 820) the data of said data element to provide decoded data; and,
      o applying (720, 825) a full deblocking filter to at least one part of said decoded data, said full deblocking filter being applied to all of said layers.

2.   Method according to claim 1 wherein said steps of decoding the data of said data element and of applying a full deblocking filter to said at least one part of said decoded data are performed substantially simultaneously in two different threads.

3. Method according to claim 1 or to claim 2 further comprising the step of memorizing (735, 840) the layered organization of the bistream.

4. Method according to any one of the preceding claims further comprising the step of determining if said data element belongs to a said at least one enhancement layer of which the spatial resolution is higher than the layer below (705, 805) and applying a partial deblocking filter to previously decoded data belonging to said layer below (710, 810).

5. Method according to any one of the preceding claims wherein the scalable bitstream is of the SVC type.

6. Method according to claim 5 wherein the access unit of the predetermined type is associated with an image of the IDR type.

7. Method according to any one of the preceding claims further comprising the step of receiving (600) at least one data element of a second access unit, different to said at least one access unit and the steps of:

- decoding (650) the data of said data element of said second access unit to provide decoded data of said second access unit;
- if said at least one data element of said second access unit belongs to the topmost layer of said at least one enhancement layer (615), applying a full deblocking filter to at least one part of said decoded data of said second access unit (625); and,
- if said data element of said second access unit belongs to a said at least one enhancement layer of which the resolution is below than that of the layer above (635), applying an intra deblocking filter to at least one part of said decoded data of said second access unit (645).

8. Method according to the preceding claim further comprising the step of applying a full deblocking filter to at least one part of the picture being decoded if said picture being decoded is used as a reference picture for a motion compensated temporal prediction of at least one other picture.

9. Method according to the preceding claim wherein the step of applying a full deblocking filter to at least one part of the picture being decoded and the decoding step of said data element of said second access unit are performed substantially simultaneously.

10. Computer program comprising instructions for carrying out each step of the method according to any one of the preceding claims when the program is loaded and executed by a programmable apparatus.

11. Information storage means readable by a computer or a microprocessor storing instructions of a computer program, **characterized in that** it makes it possible to implement a method of decoding at least one part of a picture encoded in a bitstream according to any one of claims 1 to 9.

12. A device for decoding at least one part of a picture encoded in a base layer and at least one enhancement layer in a scalable bitstream, said bitstream comprising at least one access unit representing said picture, each said at least one access unit comprising a plurality of data elements, each said data elements belonging to a said layer, the device being **characterized in that** it comprises the following means:

- means for receiving at least one data element of said at least one access unit; and,
- means for decoding the data of said data element to provide decoded data and applying a full deblocking filter to at least one part of said decoded data if said at least one data element belongs to an access unit of a predetermined type, the full deblocking filter being applied to all of said layers.

13. Device according to claim 12 wherein said means for decoding the data of said data element and applying a full deblocking filter to said at least one part of said decoded data are adapted to execute the decoding and filtering steps in two different parallel threads.

14. Device according to claim 12 or claim 13 further comprising means for determining if said data element belongs to a said at least one enhancement layer of which the resolution is higher than the layer below and applying an intra deblocking filter to previously decoded data belonging to said layer below.

15. Device according to any one of claims 12 to 14 further comprising means for receiving at least one data element of a second access unit, different to said at least one access unit and the following means:

- means for decoding the data of said data element of said second access unit to provide decoded data of said second access unit;
- means for determining whether said at least one data element of said second access unit belongs to the topmost layer of said at least one enhancement layer and, if so, applying a full deblocking filter to at least one part of said decoded data of said second access unit; and,
- means for determining whether said data element of said second access unit belongs to a said at least one enhancement layer of which the resolution is below than that of the layer above and, if so, applying an intra deblocking filter to at least one part of said decoded data of said second access unit.

Fig. 1

Fig. 3

Fig. 2

EP 2 265 026 A1

Fig. 5

Fig. 4

Fig. 7

EP 2 265 026 A1

Fig. 6

EP 2 265 026 A1

800

NAL unit belongs to next AU ? — yes → Store the layered organization of the SVC bistream (840) → END

no

805 — NAL unit in an enhancement layer with a higher spatial resolution than the previous layer ? — yes → Apply intra deblocking on the decoded slice(s) of previous layer (810)

no

Launch decoding and full deblocking threads (815)

Decode the picture coded data contained in current NAL unit (820)

Apply full deblocking on picture currently being decoded (825)

Obtain decoded slice (830)

Obtain next NAL unit to decode (835)

Fig. 8

Fig. 9

Europäisches
Patentamt

European
Patent Office

Office européen
des brevets

# EUROPEAN SEARCH REPORT

Application Number

EP 09 29 0453

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/000110 A (THOMSON LICENSING [FR]; GAO YONGYING [CN]; WU YUWEN [CN]; WANG CHUANMI) 31 December 2008 (2008-12-31) * figures 4,5 * * page 23, line 1 - page 25, line 19 * | 1,3-6, 10-12,14 | INV. H04N7/26 |
| D,X | SCHWARZ H ET AL: "Overview of the Scalable Video Coding Extension of the H.264/AVC Standard" IEEE TRANSACTIONS ON CIRCUITS AND SYSTEMS FOR VIDEO TECHNOLOGY, IEEE SERVICE CENTER, PISCATAWAY, NJ, US, vol. 17, no. 9, 1 September 2007 (2007-09-01), pages 1103-1120, XP011193019 ISSN: 1051-8215 * sections V and V-B.1c * | 1-3, 5-13,15 | |
| X | SCHWARZ H ET AL: "Constrained Inter-Layer Prediction for Single-Loop Decoding in Spatial Scalability" IMAGE PROCESSING, 2005. ICIP 2005. IEEE INTERNATIONAL CONFERENCE ON GENOVA, ITALY 11-14 SEPT. 2005, PISCATAWAY, NJ, USA,IEEE, vol. 2, 11 September 2005 (2005-09-11), pages 870-873, XP010851192 ISBN: 978-0-7803-9134-5 * section III, 1st paragraph * | 1,5, 10-12 | TECHNICAL FIELDS SEARCHED (IPC)<br><br>H04N |
| A | ZHONG: "Not changing the spec for Parallel Decoding" JOINT VIDEO TEAM (JVT) OF ISO/IEC MPEG & ITU-T VCEG(ISO/IEC JTC1/SC29/WG11 AND ITU-T SG16 Q6), XX, XX, no. JVT-F028, 13 December 2002 (2002-12-13), XP030005598 * the whole document * | 2,9,13 | |

-/--

The present search report has been drawn up for all claims

| Place of search | Date of completion of the search | Examiner |
|---|---|---|
| The Hague | 19 February 2010 | Ferré, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 09 29 0453

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SEGALL C A ET AL: "Spatial Scalability Within the H.264/AVC Scalable Video Coding Extension" IEEE TRANSACTIONS ON CIRCUITS AND SYSTEMS FOR VIDEO TECHNOLOGY, IEEE SERVICE CENTER, PISCATAWAY, NJ, US, vol. 17, no. 9, 1 September 2007 (2007-09-01), pages 1121-1135, XP011193020 ISSN: 1051-8215 * section III.C * | 1-3, 5-13,15 | |
| X | EP 1 677 545 A (SAMSUNG ELECTRONICS CO LTD [KR]) 5 July 2006 (2006-07-05) * paragraphs [0020], [0083] - [0096]; figure 13 * | 1,5, 10-12 | |
| X | US 2008/137752 A1 (HE ZHONGLI [US]) 12 June 2008 (2008-06-12) * paragraphs [0036], [0049], [0057] * * table 1 * | 1,5, 10-12 | |

**TECHNICAL FIELDS SEARCHED (IPC)**

The present search report has been drawn up for all claims

| Place of search | Date of completion of the search | Examiner |
|---|---|---|
| The Hague | 19 February 2010 | Ferré, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**
EP 09 29 0453

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2010

| Patent document cited in search report | | Publication date | Patent family member(s) | | Publication date |
|---|---|---|---|---|---|
| WO 2009000110 | A | 31-12-2008 | NONE | | |
| EP 1677545 | A | 05-07-2006 | AU | 2005323586 A1 | 13-07-2006 |
| | | | CA | 2592515 A1 | 13-07-2006 |
| | | | JP | 4191729 B2 | 03-12-2008 |
| | | | JP | 2006191576 A | 20-07-2006 |
| | | | JP | 4191777 B2 | 03-12-2008 |
| | | | JP | 2008104226 A | 01-05-2008 |
| | | | JP | 4191778 B2 | 03-12-2008 |
| | | | JP | 2008104227 A | 01-05-2008 |
| | | | JP | 4191779 B2 | 03-12-2008 |
| | | | JP | 2008104228 A | 01-05-2008 |
| | | | WO | 2006073241 A1 | 13-07-2006 |
| US 2008137752 | A1 | 12-06-2008 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Heiko Schwarz ; Detlev Marpe ; Thomas Wiegand.** Overview of the Scalable Extension of the H.264/MPEG-4 AVC Video Coding Standard. *IEEE Transactions on Circuits and Video Technology,* September 2007, vol. 17 (9), 1103-1120

- **P. List ; A. Joch ; J. Lainema ; G. Bjøntegaard ; M. Karczewicz.** Adaptive Deblocking Filter. *IEEE Transactions on Circuits and Systems For Video Technology,* July 2003, vol. 13 (7), 614-619